(19) Europäisches Patentamt
European Patent Office
Office européen des brevets

(11) Publication number: **0 125 155**
**A1**

(12) # EUROPEAN PATENT APPLICATION

(21) Application number: 84400656.9

(22) Date of filing: 03.04.84

(51) Int. Cl.³: A 01 N 43/90
A 01 N 57/14
//(A01N43/90, 43/30),
(A01N57/14, 43/90)

(30) Priority: 07.04.83 US 483030
07.04.83 US 483072

(43) Date of publication of application:
14.11.84 Bulletin 84/46

(84) Designated Contracting States:
CH DE FR GB IT LI NL

(71) Applicant: MERCK & CO. INC.
126, East Lincoln Avenue P.O. Box 2000
Rahway New Jersey 07065(US)

(72) Inventor: Putter, Irving
R.D. No. 1, Box 436
Martinsville New Jersey 08836(US)

(72) Inventor: Dybas, Richard A.
437 Rivercrest Drive
Piscataway New Jersey 08854(US)

(74) Representative: Warcoin, Jacques et al,
Cabinet Régimbeau 26, avenue Kléber
F-75116 Paris(FR)

(54) **Novel synergistic agricultural insecticidal, pesticidal and acaricidal combinations.**

(57) There are disclosed novel combinations of agricultural insecticides which have a synergistic effect against such agricultural insect and mite pests. Avermectin natural product compounds and certain semi-synthetic derivatives thereof are compounds known to be highly effective, broadspectrum agricultural antiparasitic and pesticidal agents. Such compounds are combined with insect metabolism inhibitors known to be active as agricultural insecticidal agents. In combination, effects are observed which are greater than what could be expected from the individual compounds. Compositions containing such a synergistic combination of compounds as the active ingredients are also disclosed.

EP 0 125 155 A1

TITLE OF THE INVENTION

NOVEL SYNERGISTIC AGRICULTURAL INSECTICIDAL, PESTICIDAL AND ACARICIDAL COMBINATIONS

BACKGROUND OF THE INVENTION

Avermectin compounds are a series of natural products isolated from the fermentation broth of a strain of *Streptomyces avermitilis*. The series consists of eight compounds, four major and four minor. The compounds are disclosed in U.S. Patent 4,310,519. Certain derivatives of such compounds are also disclosed, such as the 22,23-dihydro derivatives described in U.S. Patent 4,199,569. The 13-deoxy derivatives of avermectin compounds are disclosed in U.S. Patents 4,171,314 and 4,173,571. In addition, the 4"-phosphate derivatives of the avermectin compounds with a 13-O-disaccharide group present, are included in the instant combination. Such compounds are disclosed in copending U.S. Patent Application Serial No. 461,843.

The synergistic combinations also include insect metabolism inhibitors such as piperonyl butoxide disclosed in The 1981 Farm Chemicals Handbook, page C266 and The Merck Index, Ninth Edition, Abstract 7270.

## SUMMARY OF THE INVENTION

The instant disclosure describes certain insecticidal, pesticidal and acaricidal synergistic combinations of avermectin compounds and insect metabolism inhibitors. Thus, it is an object of this invention to describe such synergistic combinations. It is a further object to describe the individual components of such synergistic combinations and the relative proportion of each component in the combination. A still further object of this invention is to describe the agricultural insecticidal, pesticidal and acaricidal effects of such combinations. Further objects will become apparent from a reading of the following description.

## DESCRIPTION OF THE INVENTION

The instant invention consists of a combination of avermectin compounds and insect and mite metabolism inhibitors which have a synergistic effect when applied to areas infested with domestic insect pests or when used in the control or elimination of infestations in agricultural environments. The avermectin compounds of this invention have the following formula:

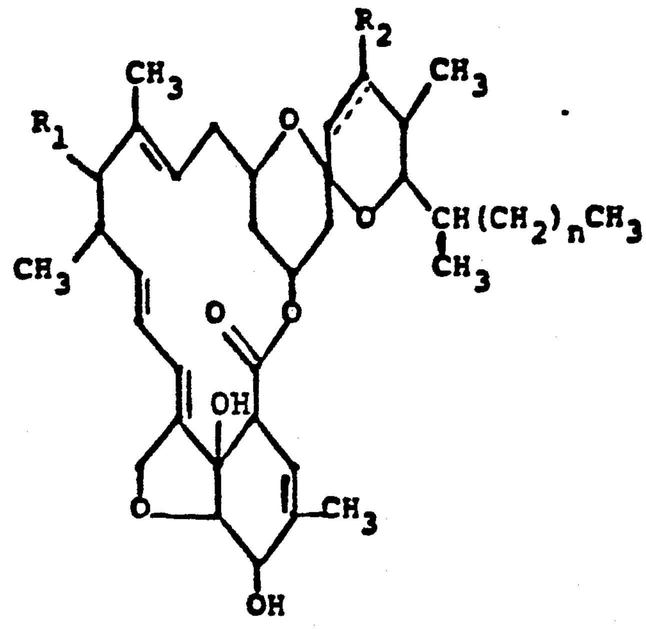

wherein n is 0 or 1;

$R_1$ is hydrogen, α-L-oleandrosyl-α-L-oleandrosyloxy and the 4"-phosphate derivative thereof;

$R_2$ is hydrogen; and

the broken line indicates a single or a double bond; however, $R_2$ is present only when the broken line indicates a single bond.

The insect metabolism inhibitory compounds that constitute the second part of the instant synergistic combinations are exemplified by piperonyl butoxide, triphenyl phosphate, and the like.

When used as agricultural insecticides the avermectin compounds are administered at dosage rates of from 1 to 50 m of the active compound per hectare. When used as agricultural insecticide agents the insect metabolism inhibitors are administered at dosage rates of from 1 to 2500 g of the active compound per hectare.

When used as pesticidal agents the avermectin compounds are applied at dosage rates of

from 0.01 to 5,000 ppm of the active compound. When used as pesticidal additives the piperonyl butoxide is administered at dosage rates of from 10 to 30,000 ppm.

The synergistic effects of the combination of the avermectin compounds with the insect and mite metabolism inhibitors are observed in providing for a reduced dosage of one or both of the components. Thus, a lessened quantity of the agricultural insecticide-acaricide is administered than normally would be required which results in a lessening of possible side effects and a lessening in the development of resistance. In addition, there is observed the synergistic expansion of the spectrum of agricultural insects and mites which may be successfully combatted than would be expected from a consideration of the spectra of activity of the individual components. Thus, the possibility of eliminating agricultural insect and mite infestations against which the individual components are ineffective or only partially effective is realized in the instant synergistic combination.

The agricultural insect and mite infestations against which the instant synergistic combination is particularly effective are Coleoptera such as Leptinotarsa decemlineata; Lepidoptera such as Spodoptera exigur, Plutella xylostella and Heliothis virescens; Homoptera such as Psylla pyricola and Aphis gossypi; acarina such as Tetranychus urticae, Panonychus citri, Phyllocoptivta oleivora, Polyphagotai sonemus latus and the like.

The pest infestations against which the instant synergistic combination is particularly

effective are Diptera (flies), Hymenoptera (bees, wasps and ants, in particular, fire ants and pharaoh ants), mosquitos, roaches, termites, tree pests such as gypsy moth and spruce budworm, and other domestic insect pests.

The instant synergistic combination is useful for controlling the above insect pests, and others, on economically useful crops such as cotton, citrus, deciduous fruit, soybeans, rice, cereals and vegetables.

In using the instant synergistic combination, the individual components are used in proportions which may extend to from 1 part of the avermectin compound to 2500 parts of the insect metabolism inhibitor to from 1 part of the avermectin compound to 1 part of the insect metabolism inhibitor.

The synergistic composition is useful against insect and mite pests of stored grain and agricultural plants and immature stages of insects living on plant tissue. The synergistic composition is also useful for the control of soil nematodes and soil insect pests which may be of importance in agriculture. When the synergistic composition is used to combat agricultural pests that inflict damage upon crops while they are growing or in storage, it is applied using known techniques such as sprays, granules, dusts, emulsions, and the like, to the growing plant or the soil in which it is planted, or to the stored crops to effect protection from such agricultural pests.

The instant synergistic combination has the added advantage in that the avermectin component has a long-term effect at very low doses and the

piperonyl butoxide has very rapid effects. Thus, immediate control is achieved from the piperonyl butoxide which very quickly reduces the pest population, and long-term control is achieved from the avermectin compound, which prevents the repopulation of the insect pests and avoids costly reapplications.

The instant synergistic combination is applied most conveniently as part of a spray, bait or powder formulation. The spray formulation may be aqueous or non-aqueous with the combination of ingredients dissolved or suspended therein. Emulsifiers, suspending agents and other formulation adjuvants may be included in the formulation as required. Any liquid formulation, commonly used by those familiar with the technique of pesticidal spray formulations may be employed. Compressed air, high pressure "airless" sprays, atomizer type aerosol sprays and the like may be employed. Hand-held, hand powered or electric powered sprays as well as aerosols are suitable for household uses while gasoline powered or aereal applications are generally used for larger scale and commercial applications. Such spray techniques are suitable for those applications where direct application to the insect pest, its feeding area or habitat are desired.

Another formulation suitable for such direct application is a powder formulation which may be dusted in those areas where the insect pest feeds, traverses or lives. The synergistic combination may be prepared into a powder formulation by combining with or suspending on such substrates as talc, starch, clay, kaolin, silica, bentonite, diatomaceous

earth, and the like, using techniques known to those skilled in the art.

The instant synergistic combination may be formulated as a bait which has the advantage that the insects which remain in the nest, or those insects which have nests that are difficult to locate are treated. Bait formulations are particularly advantageous with respect to the avermectin compound considering its long duration of activity and high potency which is potentiated and supplemented with the presence of the piperonyl butoxide.

The bait formulations are prepared from animal or vegetable material which serves as food for the insect pest. Sugar solutions used in the liquid form or to add to other materials are particularly useful. The addition of the synergistic combination to meat products such as prepared pet foods results in a very useful bait formulation. The synergistic combination may also be combined as a suspension or solution in a vegetable oil such as soybean oil, sesame oil, cottonseed oil, and the like and combined with a dry vegetable matter such as defatted corn grits, citrus pulp, sugarcane pulp and the like and molded into bait formulations of any size or shape.

In addition to the primary ingredients the bait formulation may contain other ingredients such as stabilizers, suspending agents, emulsifiers, and the like.

The amount in the synergistic combination of active ingredients may be varied to suit the particular uses to which the formulation is being put. Generally, however, the synergistic combination formulation will contain from about 0.01 to 5% of the

active ingredients in a spray concentrate formulation which is usually diluted with up to about 500 volumes of water for spraying onto plants. An exception to this is the technique known as ultra low volume spray wherein solutions many times more concentrated are used. From about 0.01 to 25% of the active ingredients are used in a powder formulation, and from about 0.001 to 5% of the active ingredients are used in the bait formulation. The active ingredients are present within the ranges of the proportions discussed above.

Specific formulations containing avermectin compounds and insect metabolism inhibitors which have synergistic agricultural insecticidal and antiparasitic effects are as follows:

Spray Concentrate Formulation:

| | |
|---|---|
| Avermectin B1 | 0.3% |
| piperonyl butoxide | 0.5% |
| propylene glycol | 86.2% |
| Triton X-100 (Suspending and emulsifying agent) | 12% |

The above concentrate is diluted with 400 volumes of water to prepare the finished spray formulation.

Bait Formulation:

| | |
|---|---|
| Avermectin B1 | 0.1% |
| piperonyl butoxide | 0.1% |

The two active ingredients are suspended in 10 volumes of soybean oil to form a suspension of

active ingredients and the oil suspension is mixed with defatted corn grits to form a mixture containing 0.2% of active ingredients which is shaped into bait cubes or any other desired shape.

| Liquid Formulation | Weight % | Weight % |
|---|---|---|
| Avermectin Bla/Blb (91%) | 2.2 | 2.2 |
| Piperonyl butoxide | 10.0 | 20.0 |
| Xylenes | 75.8 | 65.8 |
| Emulsifier | 12.0 | 12.0 |
| Total | 100.0 | 100.0 |

| Granular Formulation | Weight % | Weight % |
|---|---|---|
| Avermectin Bla/Blb (91%) | 0.33 | 0.33 |
| Piperonyl butoxide | 1.50 | 6.00 |
| Monmonillonite Granule | 92.17 | 87.67 |
| Diethylene glycol | 6.00 | 6.00 |
| Total | 100.00 | 100.00 |

WHAT IS CLAIMED IS:

1. A synergistic agricultural insecticidal and pesticidal combination of an avermectin compound having the formula:

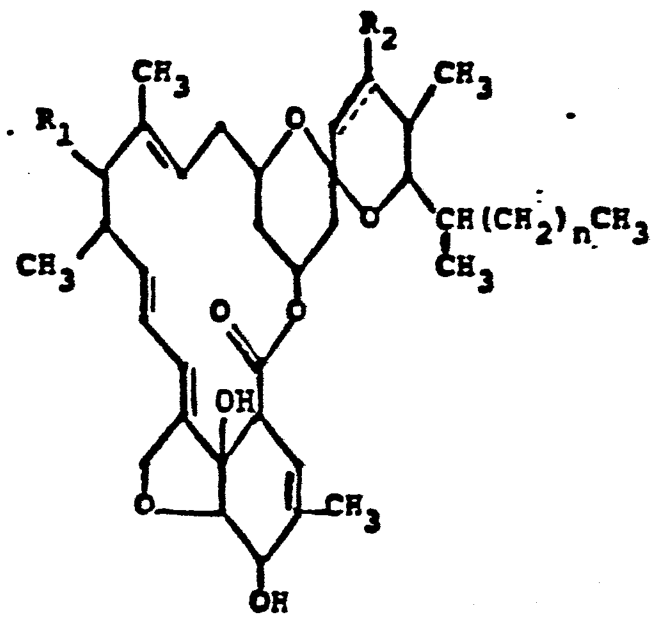

wherein n is 0 or 1;

$R_1$ is hydrogen, α-L-oleandrosyl-α-L-oleandrosyloxy and the 4"-phosphate derivative thereof;

$R_2$ is hydrogen; and

the broken line indicates a single or a double bond; however, $R_2$ is present only when the broken line indicates a single bond; and

an insect metabolism inhibitor.

2. The synergistic combination of Claim 1 wherein compounds are present at a proportion of from 1 part of the avermectin compound to 2500 parts of the insect metabolism inhibitor, to from 100 parts of the avermectin compound to 1 part of the insect metabolism inhibitor.

3. The synergistic combination of Claim 1 wherein the insect metabolism inhibitor is piperonyl butoxide or triphenyl phosphate.

4. A pesticidal formulation containing an inert carrier, an avermectin compound having the formula:

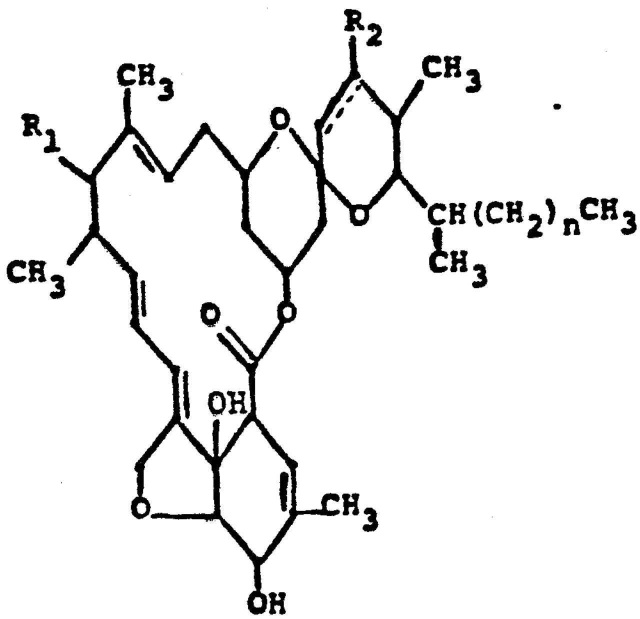

wherein n is 0 or 1;

$R_1$ is hydrogen, α-L-oleandrosyl-α-L-oleandrosyloxy and the 4"-phosphate derivative thereof;

$R_2$ is hydrogen; and

the broken line indicates a single or a double bond; however, $R_2$ is present only when the broken line indicates a single bond; and piperonyl butoxide.

5. The pesticidal formulation of Claim 1 wherein the formulation is in the form of a liquid spray, a dustable powder or bait.

6. A method for the treatment of pest infestations which comprises applying to an area infested with pests, the synergistic combination of Claim 1.

7. A method for the treatment of agricultural insect infestations which comprises administering to an agricultural crop or commodity infected with insect pests, the synergistic combination of Claim 1.

European Patent Office

# EUROPEAN SEARCH REPORT

0125155
Application number
EP 84 40 0656

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | CENTRAL PATENTS INDEX, BASIC ABSTRACTS JOURNAL, section C, AGDOC, week D50, 10th February 1982, abstract 91752, Derwent Publications Ltd., London, GB; & JP - A - 56 139 405 (HOKKAI SANKYO) 30-10-1981 * Abstract * | 1-7 | A 01 N 43/90<br>A 01 N 57/14 //<br>(A 01 N 43/90<br>A 01 N 43/30 )<br>(A 01 N 57/14<br>A 01 N 43/90 ) |
| Y,D | US-A-4 310 519 (G. ALBERS-SCHONBERG et al.) * Column 9, line 45 - column 10, line 47; column 10, line 67 - column 11, line 2 * | 1-7 | |
| | | | TECHNICAL FIELDS SEARCHED (Int. Cl. 3) |
| | | | A 01 N |

The present search report has been drawn up for all claims

| Place of search | Date of completion of the search | Examiner |
|---|---|---|
| THE HAGUE | 02-08-1984 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document